# EUROPEAN PATENT APPLICATION

(11) **EP 1 921 577 A1**
(43) Date of publication of application: **14.05.2008**
(21) Application number: 07120319.4
(22) Date of filing: 09.11.2007
(51) Int. Cl.: G06Q 10/00, H04L 29/06

(54) **Social networking system**

(30) Priority: 10.11.2006 JP 2006306012; 28.02.2007 JP 2007049221
(71) Applicant: YAMAHA CORPORATION, Naka-ku Hamamatsu-shi Shizuoka 430-8650 (JP)
(72) Inventor: Miyazaki, Takuma c/o Yamaha Business Support Corporation, Hamamatsu-shi Shizuoka-ken, 430-7711 (JP)
(74) Representative: Kehl, Günther

(57) **Abstract**

A server 102 and user apparatuses 103 through 105, 106A through 108A, and 106B through 108B are connected to a network to configure a social networking system. The server 102 stores multimedia data of respective users and best friend lists for identifying users with whom the respective users have established a relationship of best friends within a range of a certain number of users which can be considered as private use. When the server 102 receives an access request from one of the user apparatuses 103 through 105, 106A through 108A, and 106B through 108B, the server 102 permits the one user apparatus to access the multimedia data of the user of the one user apparatus and the multimedia data of users with whom the user of the one user apparatus has established the relationship of best friends.

## Description

### BACKGROUND OF THE INVENTION

### Field of the Invention

The present invention relates to a social networking system which allows sharing of multimedia data such as music content among a limited small number of users.

### Description of the Related Art

Because of recent developments in social networking services (SNS) using the Internet, an increasing number of people enjoy communications with their friends and people having the same hobby and taste (e.g., see http://mixi.jp/). Particularly, music SNSs are increasing. In the music SNSs, users are able to share histories of reproduction (play lists) of music content items possessed by the respective users.

In addition, there are services called CGM (Consumer Generated Media) which allow consumers themselves to generate content using the Internet. These CGM services include services such as sharing of music files and picture files. However, these services present problems of copyright infringement if the content items uploaded by consumers are commercial content.

In order to take measures against such infringement of copyrights, it is determined by human visual checks whether each uploaded content item is commercial content or not. As the check of an uploaded content item by humans to determine whether or not to release the uploaded content item, an art disclosed in Japanese Patent Laid-Open No. 2002-041058, for example, has been known.

### DISCLOSURE OF THE INVENTION

### Problems to Be Solved by the Invention

In the social networking services (SNS), sharing of music content itself is not permitted in view of protection of copyrights. Furthermore, sharable information on reproduction histories and the like is available only on personal computers, but such sharable information is not available on mobile media players (e.g., mobile music players) and the like. In a case where a user desires to establish a relationship of friends on the SNS with a person whom the user met on the road, furthermore, the user is required to register him as a friend on his personal computer situated at home, being unable to immediately make the registration on the road.

An object of a first invention is to provide an art for allowing sharing of multimedia data such as music content among a small number of users which can be considered as a range of private use, and for enabling the users to easily establish a relationship with another user on the road to share such data.

In the CGM services, furthermore, in a case where content items are checked by humans as in the case of the above-described related art, if the number of uploaded content items is enormous, it is difficult to handle all the content items. Therefore, any measures such as limiting the number of content items to be uploaded to a small number that can be checked by humans or increasing the number of people who check the uploaded content items in spite of massive costs have to be taken. The former measure can make the CGM services less attractive due to the limitation on the number of content items. The latter measure requires massive costs, both resulting in difficulty in maintaining the services. In addition, the check of content items by humans also causes inconveniences such as taking long to upload content items to servers and causing errors due to checks by humans. Because commercial content items are not allowed to upload in the conventional services, furthermore, the popularity of the services can slow down.

An object of a second invention is to provide an art used in CGM services for avoiding infringement of copyrights even in cases where commercial content items are uploaded from user apparatuses, and leading to copyright holders' profit in cases where commercial content items are uploaded.

### Means for Solving Problems and Technical Effect

It is the first invention to provide a social networking system for providing communications services available to users who have established a relationship of best friends between the users, the system including a server and a plurality of user apparatuses being interconnected via a network; the server storing, in a storage area provided for each of the users, multimedia data of the each user and a best friend list of the each user, the best friend list being provided for identifying users between whom the each user has established the relationship of best friends within a range of a certain number of users which can be considered as private use. When the server receives an access request from one of the user apparatuses, the server permits access to the multimedia data stored in the storage area of a user who uses the one user apparatus and the multimedia data stored in the storage area of users with whom the user has established the relationship of best friends.

According to the first invention, in a case where mobile media players are used as the user apparatuses, particularly, a user of one of the mobile media players is allowed to reproduce streamed multimedia data of another user with whom the one user has established the relationship of best friends. In a case where one user of a mobile media player has established the relationship of best friends with another user of another mobile media player, furthermore, the one user is allowed to make his mobile media player to stream multimedia data stored in his mobile media player to the another mobile media player of the another user. Even on the road or the like, furthermore, each user of each mobile media player is allowed to establish the relationship of best friends with another user of another mobile media player. The best friend list stored in the mobile media player is allowed to be synchronized with the best friend list stored in the server.

In the social networking system, according to the first invention, each user is allowed to store his multimedia data in his network storage of the server, while the each user is allowed to establish the relationship of best friends with a limited number of other users that can be considered as a range of private use. In the social networking system according to the first invention, multimedia data is allowed to be shared among best friends by permitting other users with whom the relationship of best friends has been established to access the network storage so that multimedia data stored in the network storage is provided for the best friends. In the social networking system according to the first invention, therefore, sharing of multimedia files within the range of private use (e.g., sharing among four to five users is considered as within the range of private use) is legally allowed. Because users are allowed to establish the relationship of best friends with another user on their mobile media players as well, in addition, the users can easily establish the relationship on the road or the like. Since the best friend list stored in each of the mobile media players is synchronized with the best friend list stored in the server, furthermore, the social networking system ensures exact agreement between the respective best friend lists of each user.

It is the second invention to provide a server for storing content data uploaded from user apparatuses and providing the content data for the user apparatuses, the server automatically identifying, when content data is uploaded from one of the user apparatuses, the content data. The server changes, in accordance with an identification result of the content data, a manner in which the content data is provided for another user apparatus.

In the second invention, the server may change, in accordance with whether the identified content data is commercial (copyrighted) content or not, a length of time of the content data to be provided.

In the second invention, in a case where the identified content data is commercial content, the server may automatically add, to the content data, affiliate information which is information for linking to a site which sells a product related to the commercial content data, and provide the content data with the link information added.

When a content item is uploaded to the server from a user, according to the second invention, the content item is identified not by humans but automatically. Therefore, the second invention obviates the inconveniences caused by limiting the number of uploadable content items and by costs required in order to increase manpower. In addition, the second invention not only reduces time taken to upload content items to the server but also decreases the probability of occurrence of errors. Furthermore, the second invention does not prohibit uploading of commercial content but actively ties the uploading of commercial content to business opportunities, contributing to rise in popularity of the service.

### BRIEF DESCRIPTION OF THE DRAWINGS

FIG. 1 is a diagram showing an entire system configuration of a social networking system according to an embodiment of the present invention;
FIG. 2 is a block diagram schematically showing a hardware configuration of an SNS server;
FIG. 3 is a block diagram schematically showing a hardware configuration of an MMP;
FIG. 4 is a diagram showing an example configuration of user data provided for each user;
FIG. 5 is a diagram showing patterns in which music content is reproduced on the MMP;
FIG. 6 is a flowchart showing a procedure of registration of a best friend;
FIG. 7 is example screens displayed when a user "A" issues a request for registering a user "B" as a best friend;
FIG. 8 is example screens displayed when the user who has received the request responds;
FIG. 9 is a flowchart of a process for registering a best friend on the MMP;
FIG. 10 is a flowchart of a process for synchronizing best friend lists;
FIG. 11 is a flowchart of a process for updating a best friend list required at the time of update and synchronization of best friend lists;
FIG. 12 is a flowchart of a process for reproducing content on the MMP;
FIG. 13 is example screens displayed when a music content list is displayed;
FIG. 14 is a flowchart of a process for retrieving music content lists from the SNS server;
FIG. 15 is a flowchart of a process for retrieving a music content list from the MMP;
FIG. 16 is a flowchart of a process for reproducing streamed content;
FIG. 17 is a diagram showing a configuration of other servers connected with the SNS server; and
FIG. 18 is a flowchart of a process carried out by a system configured as shown in FIG. 17.

### DESCRIPTION OF THE PREFERRED EMBODIMENT

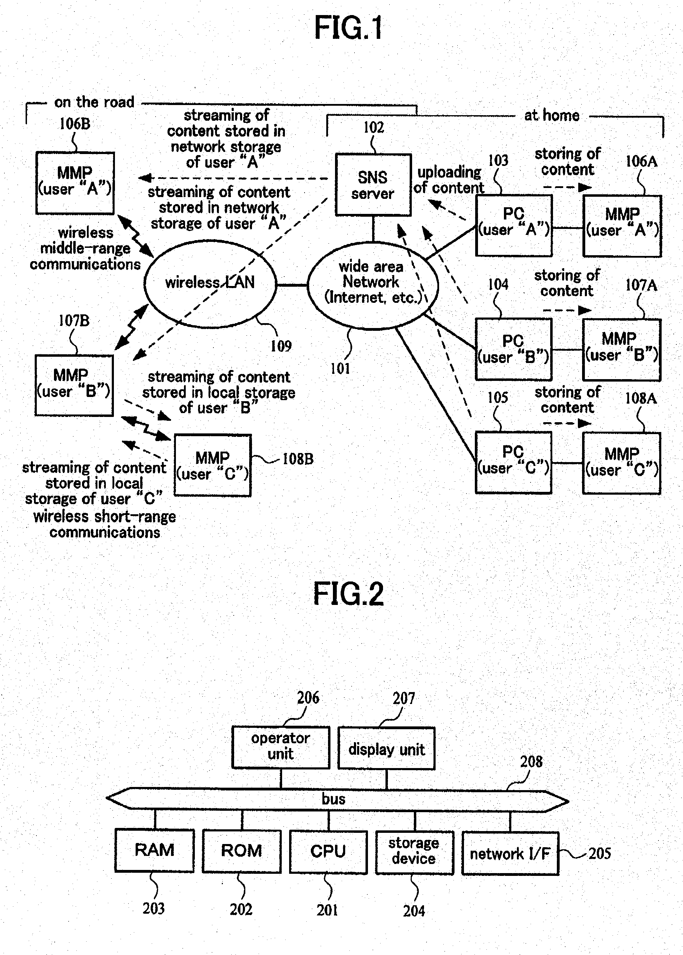

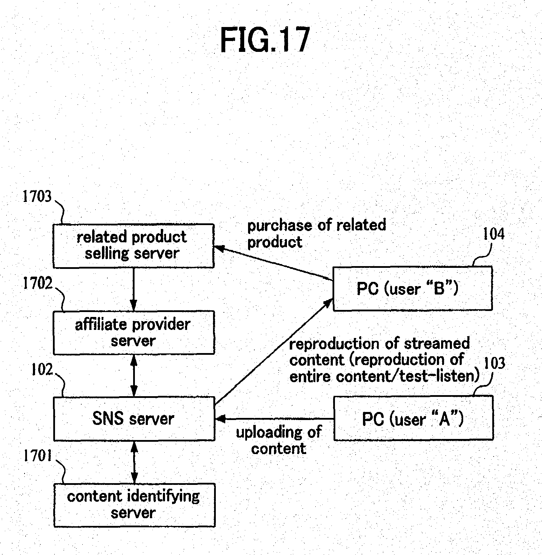

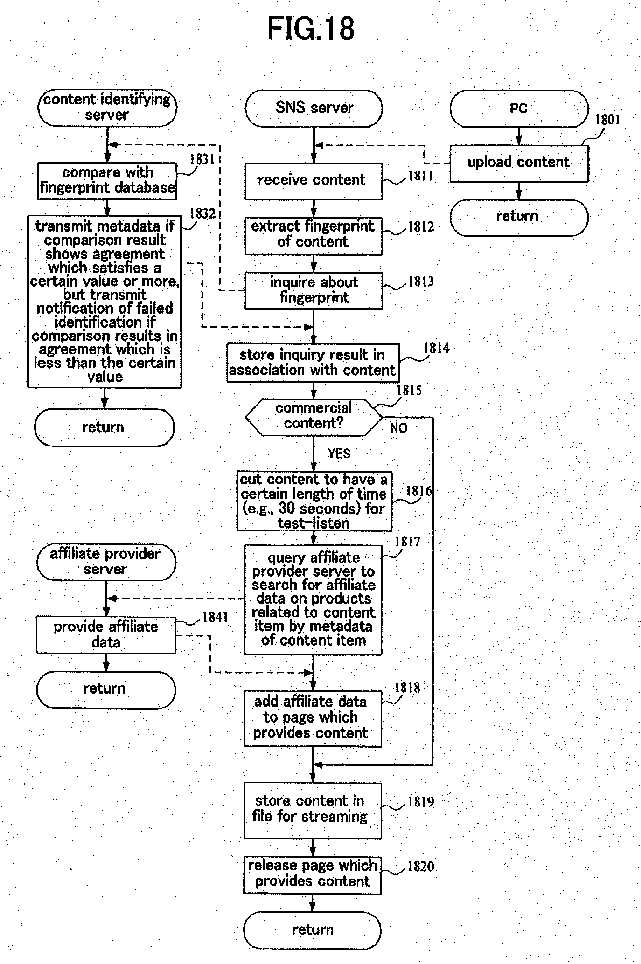

An embodiment of the present invention will now be described with reference to the drawings. FIG. 1 shows an entire configuration of a social networking system according to the embodiment of the present invention. To a wide area network 101 such as the Internet, a social networking server (SNS server) 102 and personal computers (PCs) 103, 104, 105 of respective users are connected. The respective users of the PCs 103, 104, 105 are those who have previously registered on this SNS. The users also have mobile media players (hereafter referred to as "MMPs") 106A, 107A, 108A, respectively. In FIG. 1, it is assumed that three users have registered at the system, however, the number of users can be any desired number. The SNS server 102 which is a content provider server determines whether a content item uploaded by a user is commercial content or not. The SNS server 102 has a capability of changing a manner, if it is determined that the uploaded content item is commercial content, in which the commercial content item is delivered to another user. The manner in which the commercial content item is delivered to the another user will be described in detail with reference to FIG. 17 and FIG. 18.

A user "A" is allowed to upload multimedia data files (hereafter referred to as "content") such as audio data and visual data that the user "A" keeps on his PC 103 to an area (network storage) assigned to the user "A" of the SNS server 102. In addition, the user "A" is allowed to transfer content stored in the PC 103 to the MMP 106A to store the transferred content in a storage area (local storage) of the MMP 106A. The MMP106A is capable of reproducing content stored in the local storage in response to user's instructions. As for the content uploaded by the user "A" to his network storage of the SNS server 102, the user "A" is allowed to stream the uploaded content to reproduce the uploaded content on his PC 103, and is allowed to download the uploaded content to the PC 103. Similarly, the PC 104 and the MMP 107A of a user "B" and the PC 105 and the MMP 108A of a user "C" are allowed to upload, stream and download their own content. The respective users can go out with their MMPs 106A, 107A, 108A, respectively. MMPs 106B, 107B, 108B are those taken by the respective users on the road. The respective MMPs are capable of reproducing content stored in their own local storage of the MMPs, respectively.

In this SNS, the respective users are allowed to register other users as "friends" or "best friends". As for "a best friend", if one user has deepened a relationship with another user as "a friend", the two users can register each other as "best friends" under mutual consent. In this embodiment, the number of "best friends" each user is allowed to register is five or less. In this embodiment, the respective users "A", "B", and "C" shown in F1G. 1 register each other as "best friends". The SNS server 102 provides services for forming an online community for the respective users who have registered each other as "friends" or "best friends". The services provided by the SNS server 102 include communications services such as diary service and mail service. Detailed descriptions about these services will be omitted, for these services have been well-known. This SNS also offers a sharing service which allows shared use of music content only among the limited number of users who have registered each other as "best friends".

To the network 101, a plurality of base stations (hereafter referred to as "hot spots") of a wireless LAN 109 are connected. The respective MMPs have a wireless middle-range communications capability such as Wi-Fi (trademark) and a wireless short-range communications capability such as Bluetooth (trademark). For instance, the MMP 106B of the user "A" is capable of accessing the SNS server 102 via the wireless LAN 109 and the network 101 by use of the wireless middle-range communications capability. Resultantly, the MMP 106B of the user "A" is capable of reproducing content streamed from the network storage of the user "A". In addition, each user is allowed to reproduce not only content streamed from his own network storage but also content streamed from the network storage of his best friends. Because the users "A" and "B" have established a relationship of "best friends" each other, for example, the MMP 107B of the user "B" is allowed to access content stored in the network storage of the user "A" of the SNS server 102 via the wireless LAN 109 and the network 101 to reproduce the content of the user "A", the content being streamed. Furthermore, the MMPs of the users who have established the relationship of "best friends" each other are allowed to stream content each other for reproduction of the content. Because the users "B" and "C" have established the relationship of "best friends" each other, for example, the MMP 107B of the user "B" is allowed to access the MMP 108B of the user "C" by use of the wireless short-range communications capability to reproduce content streamed from the local storage of the user "C". Similarly, the MMP 108B of the user "C" is allowed to reproduce content streamed from the local storage of the MMP 107B of the user "B".

FIG. 2 is a block diagram schematically showing a hardware configuration of the SNS server 102. The SNS server 102 has a central processing unit (CPU) 201, a read-only memory (ROM) 202, a random-access memory (RAM) 203, a storage device 204, a network interface (I/F) 205, an operator unit 206, a display unit 207 and a bus line 208. The respective components 201 through 207 are interconnected through the bus line 208 to allow exchanges of various kinds of data.

The CPU 201 controls operations of the entire server. The ROM 202 is a non-volatile memory which stores various programs to be executed by the CPU 201 and various kinds of data. The RAM 203 is a volatile memory which is used as a loading area and a working area for the programs to be executed by the CPU 201. The storage device 204, which is an external storage device such as a hard disk device, stores various programs to be executed by the CPU 201 and user data on respective users. The network I/F 205 is an interface for connecting the server to the network 101. The operator unit 206 is an input device such as a keyboard and a mouse. The display unit 207 is a device for displaying various kinds of information.

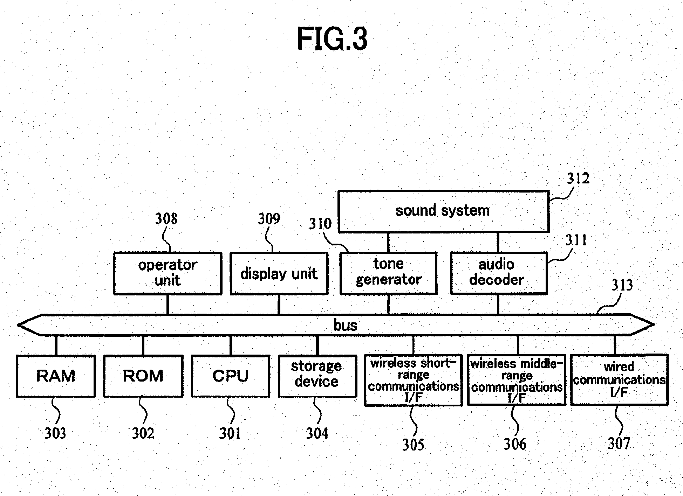

FIG. 3 is a block diagram schematically showing a hardware configuration of the MMPs carried by the respective users. The MMP has a CPU 301, a ROM 302, a RAM 303, a storage device 304, a wireless short-range communications I/F305, a wireless middle-range communications I/F 306, a wired communications I/F 307, an operator unit 308, a display unit 309, a tone generator 310, an audio decoder 311, a sound system 312 and a bus line 313.

The CPU 301 controls operations of the entire MMP. The ROM 302 is a non-volatile memory which stores various programs to be executed by the CPU 301 and various kinds of data. The RAM 303 is a volatile memory which is used as a loading area and a working area for the programs to be executed by the CPU 301. The storage device 304, which is a storage device such as a flash memory, stores user data on a user. The wireless short-range communications I/F 305 is an interface which offers a capability of wireless short-range communications such as Bluetooth (trademark). The wireless middle-range communications I/F 306 is an interface which offers a capability of wireless middle-range communications such as Wi-Fi (trademark). The wired communications I/F 307 is a wired interface such as USB for connecting the MMP with a PC. The operator unit 308 is comprised of switches and the like for giving various instructions to the MMP. The display unit 309, which is provided on an external panel of the MMP, displays various kinds of information. The tone generator 310 generates digital musical tone signals in accordance with instructions given by the CPU 301. The audio decoder 311 decodes provided audio data and then outputs the data as digital acoustic signals in accordance with instructions given by the CPU 301. The sound system 312 converts digital acoustic signals output from the tone generator 310 and the audio decoder 311 to analog acoustic signals and then emits musical tones.

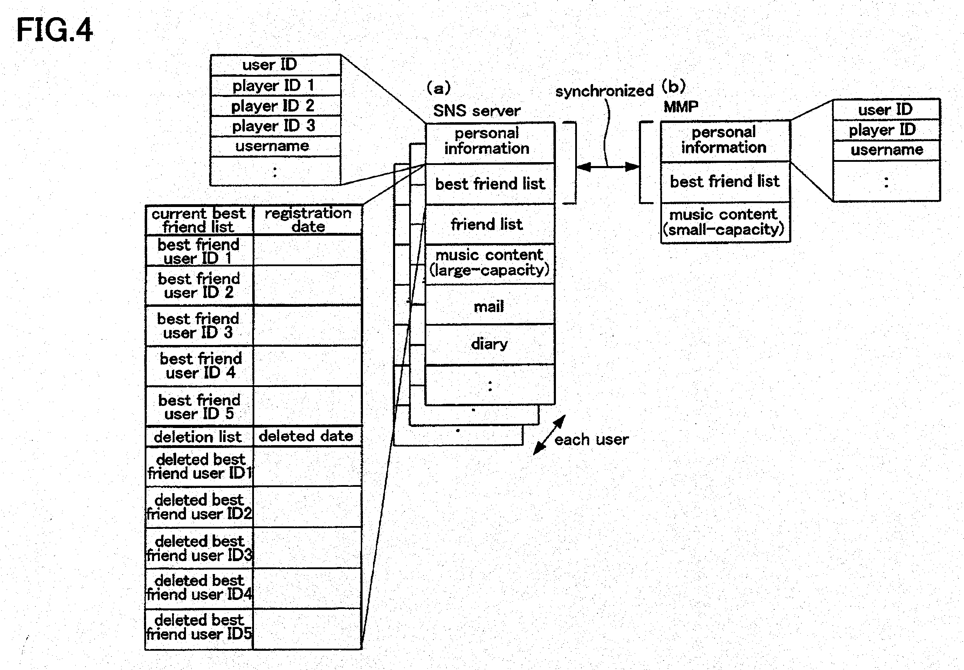

FIG. 4 is an example configuration of user data of each user. FIG. 4(a) shows user data on each user, the data being stored in the SNS server 102. The user data on each user stored in the SNS server 102 includes personal information, a best friend list, a friend list, music content, mail data, and diary data. The personal information includes a user ID for identifying the user, player ID 1 to ID 3, and a username. The player ID 1 to ID 3 are provided for indentifying MMPs carried by the user. In this embodiment, each user is allowed to register three or less MMPs. The best friend list includes user IDs of respective best friends of the user and registration date data indicative of date and time when his respective best friends have been registered as best friends. Since there are cases where the user desires to restore a user ID which has been deleted from his best friend list, deleted user IDs and date and time when the user IDs have been deleted are also stored in the best friend list. It is considered that the user who has registered other users as "best friends" is listed on the respective best friend lists of their best friends. If one user has registered another user as a best friend, more specifically, it is impossible that the another user has not registered the one user as a best friend. In this embodiment, each user is allowed to register five or less users as best friends. This is because such a low number of best friends can be considered to be allowed to legally share content as private use. The friend list is a listing of user IDs of his friends. The music content is content data stored in the network storage provided for the user. The mail data and diary data is data on mail and diary that the user uses in the SNS.

FIG. 4(b) shows a configuration of user data stored in the MMP carried by each user. The user data includes personal information, a best friend list and music content. The personal information includes a user ID of a user who carries the MMP, a player ID for identifying the MMP and information on username and the like. The best friend list included in the user data is the same as the best friend list described with reference to FIG. 4(a) and stored in the SNS server. The music content is content data stored in the local storage of the MMP, the content data being music content data reproducible on the MMP on its own.

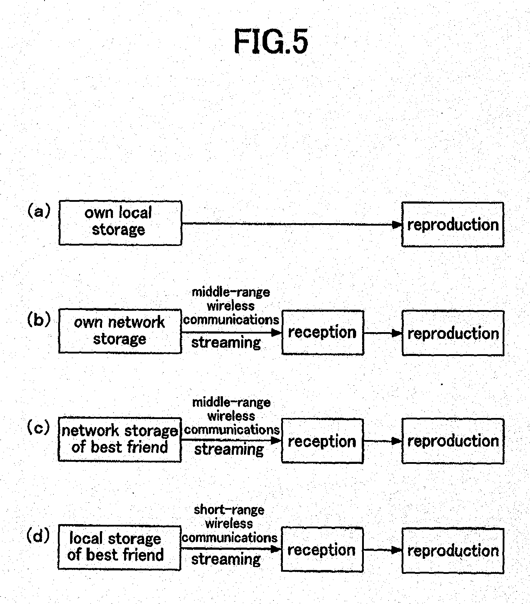

FIG. 5 shows patterns in which music content is reproduced on the MMP of each user. FIG. 5(a) shows a pattern in which a user makes his MMP reproduce music content read out from its own local storage. This pattern is equivalent to a case where the user makes his MMP reproduce music content stored in a storage means (local storage) of the MMP. FIG. 5(b) shows a pattern in which the user makes his MMP reproduce music content read out from his network storage. This pattern is equivalent to a case where the user makes his MMP receive streamed music content read out from his storage area (network storage) of the SNS server 102 by use of the middle-range wireless communications capability to reproduce the streamed music content on the MMP. FIG. 5(c) shows a pattern in which the user makes his MMP reproduce music content read out from the network storage of his best friend. This pattern is equivalent to a case where the user makes his MMP receive streamed music content read out from a storage area of his best friend provided in the SNS server 102 by use of the middle-range wireless, communications capability to reproduce the streamed music content on the MMP. FIG. 5(d) shows a pattern in which the user makes his MMP reproduce music content read out from the local storage of his best friend. This pattern is equivalent to a case where the user makes his MMP receive streamed music content read out from the storage area of the MMP of his best friend by use of the short-range wireless communications capability to reproduce the streamed music content on the MMP of the user.

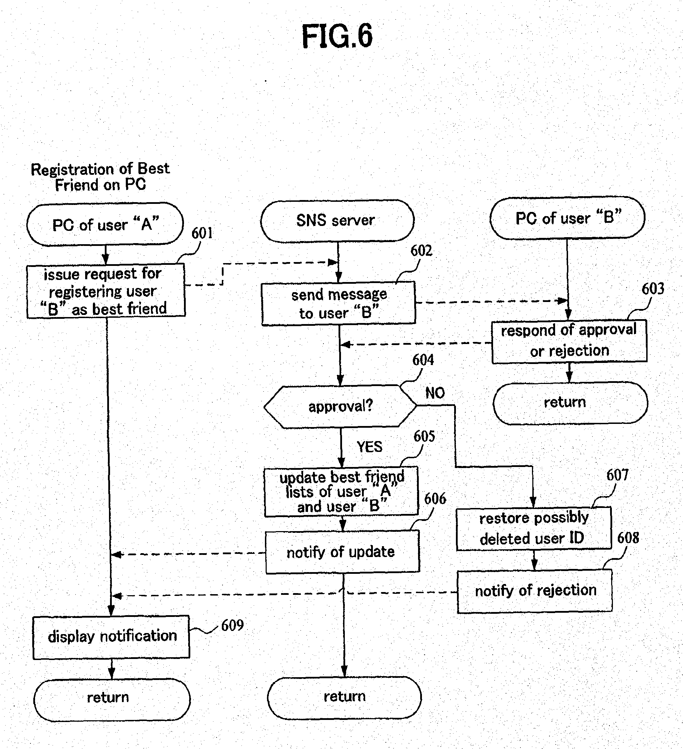

FIG. 6 is a flowchart indicative of a procedure for registering a best friend on a PC. The flowchart indicates a case where the user "A" issues a request for registering the user "B" as a best friend. In step 601, a request for registering the user "B" as a best friend of the user "A" is issued by the PC 103 of the user "A". In a case where the best friend list of the user "A" has already had five best friends, the user "A" is prompted to designate one of the five best friends as a possibly deleted user. If the user "B" approves for the registration, the one friend designated as a possibly deleted user is deleted from the best friend list of the user "A", while the user "B" is added to the best friend list. If the user "B" refuses the request, the one friend designated as a possibly deleted user remains a best friend of the user "A". In a case where the best friend list of the user "A" has a vacancy, of course, there is no need for prompting the user "A" to designate one of his best friends as a possibly deleted user.

In step 601, the PC 103 of the user "A" sends the request to the SNS server 102 via the network 101. In step 602, the SNS server 102 which has received the request sends, to the PC 104 of the user "B", a message (mail) indicative of the request from the user "A" for registering the user "B" as a best friend. On the PC 104 of the user "B", the user "B" receives the message, and then sends a response of approval or rejection to the request to the SNS server 102 in step 603. The SNS server 102 receives the response, and then determines in step 604 whether the response is approval or rejection.

If the response is approval, the SNS server 102 updates the respective best friend lists (FIG. 4(a)) of the user "A" and the user "B" in step 605. In step 605, more specifically, the best friend list of the user "A" adds the user "B", while the best friend list of the user "B" adds the user "A". In step 606, the SNS server 102 notifies the PC 103 of the user "A" of the update of his best friend list. In step 609, the PC 103 of the user "A" receives and displays the notification. In a case where the response from the user "B" is rejection, the SNS server 102 restores the possibly deleted user ID to a best friend in step 607 (in a case where no designation of a possibly deleted user ID is made, step 607 will be skipped), and then notifies, in step 608, the PC 103 of the user "A" of the response of rejection from the user "B". The PC 103 of the user "A" receives and displays the notification in step 609.

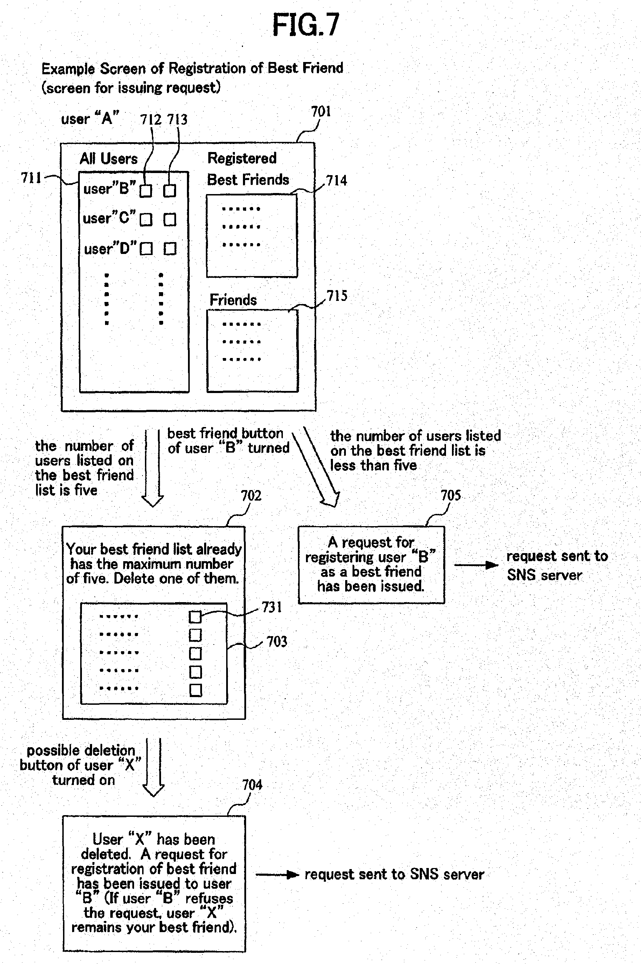

FIG. 7 is an example screen displayed when the user "A" issues the request for registering the user "B" as a best friend in step 601 of FIG. 6. The user "A" makes his PC 103 connect with the SNS server 102 via the network 101, and display a screen for registering a friend or best friend and updating his friend list or best friend list. An example screen 701 is the screen displayed on the PC 103 of the user "A". All the users are listed on a user list 711. Best friends of the user "A" are listed on a best friend list 714. Friends of the user "A" are listed on a friend list 715. On the user list 711, each user is provided with a friend button 712 and a best friend button 713. By turning on the friend button 712 of a desired user, the user "A" is allowed to register the desired user as a friend. By turning on the best friend button 713 of a desired user who has been registered as a friend, in addition, the user "A" is allowed to register the friend as a best friend.

Assume that the user "A" turns on the best friend button 713 of the user "B" included in the user list 711. If the best friend list of the user "A" has less than five best friends, it is considered that the best friend list of the user "A" has a vacancy. Therefore, the PC 103 of the user "A" displays a message 705 and sends a request from the user "A" for registering the user "B" as a best friend to the SNS server 102. The transmission of the request is equivalent to the transmission of a request in step 601 of FIG. 6.

If the best friend list of the user "A" already has five best friends, the PC 103 of the user "A" displays a best friend list 703 of the user "A" as shown in a screen 702, and prompts the user "A" to designate a possibly deleted user. On the best friend list 703, each best friend is provided with a possible deletion button 731. If the user "A" turns on the possible deletion button 731 of a user "X" who is a best friend of the user "A", the PC 103 of the user "A" displays a screen 704 and sends a request from the user "A" for registering the user "B" as a best friend to the SNS server 102. The transmission of the request is equivalent to the transmission of a request of step 601 of FIG. 6.

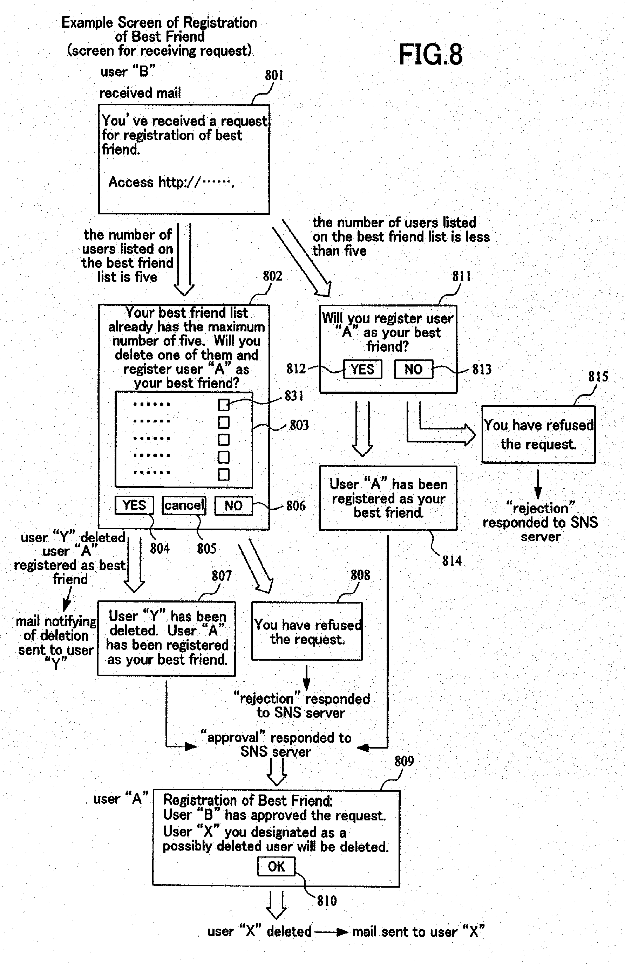

FIG. 8 is an example screen displayed when the PC 104 of the user "B" who has received the message transmitted by the SNS server 102 in step 602 of FIG. 6 makes a response of step 603. The message transmitted by the SNS server 102 to the PC 104 of the user "B" in step 602 is a mail message such as a message 801 shown in FIG. 8. The user "B" who has received the message 801 makes his PC 104 connect an URL (SNS server 102) shown in the message 801. If the SNS server 102 receives a request for access to the URL, the SNS server recognizes that the user "B" has accessed the SNS server 102 in order to make a response to the request from the user "A" for a registration of a best friend, and checks the number of listed best friends of the user "B". If the number of the best friends of the user "B" is less than five, the SNS server 102 sends a screen 811 to the PC 104 of the user "B". In a case where the user "B" desires to refuse the registration as a best friend of the user "A", the user "B" turns on a NO button 813. In this case, the PC 104 of the user "B" displays a message 815 and transmits a response of "rejection" to the SNS server 102. This response is equivalent to a transmission of rejection in step 603 of FIG. 6.

If the user "B" desires to approve the request from the user "A" for registration as a best friend, the user "B" turns on a YES button 812 on the screen 811. In this case, the PC 104 of the user "B" displays a message 814 and transmits a response of "approval" to the SNS server 102. The transmission of the response is equivalent to the transmission of a response of approval in step 603 of FIG. 6. The SNS server 102 which has received the response of approval conducts the above-described steps 605, 606 of FIG. 6. A message 809 is an example mail message which is sent to the user "A" from the SNS server 102 in step 606. More specifically, the message 809 is sent in a case where the user "A" has designated the user "X" as a possibly deleted user. On the message 809, an OK button 810 is provided. If the user "A" turns on the OK button 810, the PC 103 of the user "A" notifies the SNS server 102 of the manipulation. In response to the notification, the server 102 deletes the possibly deleted user "X" from the best friend list of the user "A", and then transmits a mail message which notifies of the deletion to the user "X".

For the actual deletion of a possibly deleted user on the data structure of the best friend list of the user data shown in FIG. 4(a), any desired scheme can be adopted, however, the deletion may be made as follows: move the user ID of the possibly deleted best friend from the current best friend list to a cell of a deleted best friend user ID 1 which is placed at the top of a deleted best friend list (deleted best friend user ID 1 to ID 4 placed prior to this move are previously moved to the cells of deleted best friend user ID 2 to ID 5 so that the cell of the deleted best friend user ID 1 is made available), then if the deletion is finalized, enter date and time of the deletion of the best friend user ID 1. If the deleted best friend user ID 1 is to be restored, the user ID of the deleted best friend user ID 1 is put back to the current best friend list (the deleted best friend user ID 2 to ID 5 are also put back to the cells of the deleted best friend user ID 1 to ID 4). Alternatively, each user included in the current best friend list may be provided with a possible deletion flag. In this scheme, if one best friend user is designated as a possibly deleted user, the flag provided for the one user is turned on. If the possible deletion of the one user is finalized, the one user whose flag has been turned on is deleted. If the one user is to be restored, the flag is reset to off.

In a case where the best friend list of the user "B" already has five registered best friends, the SNS server 102 sends back a screen 802 to the PC 104 of the user "B". The screen 802 includes a best friend list 803 of the user "B". On the best friend list 803, a deletion button 831 is provided for each best friend. The user "B" turns on the deletion button 831 of a best friend whom the user "B" desires to delete, and then turns on a YES button 804. Assume that the deletion button 831 of a user "Y" is turned on. The PC 104 of the user "B" notifies the SNS server 102 of his manipulation. In response to the notification, the SNS server 102 deletes the user "Y" from the best friend list of the user "B" and adds the user "A" to the best friend list of the user "B". In addition, the SNS server 102 sends mail message to the user "Y", notifying of the deletion from the best friend list of the user "B". In this case, the SNS server 102 also deletes the user "B" from the best friend list of the user "Y". The PC 104 of the user "B" displays a message 807 and sends a response of "approval" to the SNS server 102. The transmission of the response is equivalent to the transmission of an approval in step 603 of FIG. 6. Subsequent proceedings are similar to those explained as the message 814 and later.

On the screen 802, if the user "B" turns on a cancel button 805, the screen 802 is dismissed to cancel the process of the registration of a best friend. In this case, the proceedings starting with the mail message 801 have to be done again. On the screen 802, if the user "B" turns on a NO button 806, the PC 104 of the user "B" displays a message 808 and sends a response of "rejection" to the SNS server 102. The transmission of the response is equivalent to the transmission of a response of rejection in step 603 of FIG. 6.

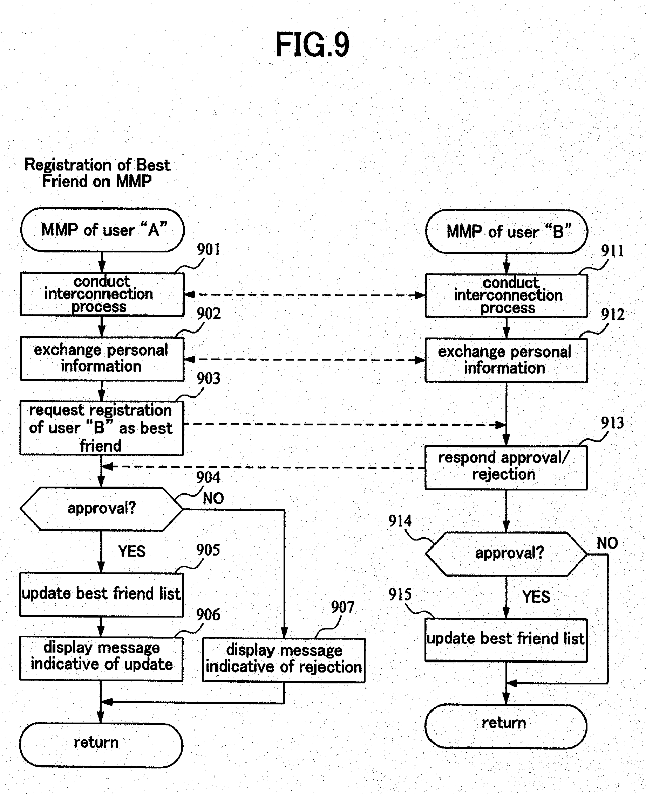

FIG. 9 shows a process for registering a best friend on the MMP. In a case where the users "A" and "B" desire to register each other as best friends on the road, the MMPs of the users "A" and "B" are interconnected by use of the short-range communications capability in steps 901, 911. In steps 902, 912, personal information (information which is included in the personal information stored in the MMP shown in FIG. 4(b) and which is permitted to disclose to other users) is exchanged each other. In step 903, the MMP of the user "A" transmits a request for registering the user "B" as a best friend to the MMP of the user "B" by use of the short-range communications capability. In step 913, the MMP of the user "B" which has received the request sends back a response of approval or rejection. In step 904, the MMP of the user "A" which has received the response determines whether the response is approval or rejection. If it is approval, the user "B" is added to the best friend list (FIG. 4(b)) stored in the MMP of the user "A" in step 905. In step 906; the MMP of the user "A" displays a message indicative of the update of the best friend list, and then terminates the process. If it is determined in step 904 that the response is rejection, the MMP of the user "A" displays a message indicative of the rejection in step 907, and then terminates the process. On the MMP of the user "B", it is determined in step 914 whether the response is approval or rejection. If it is approval, the MMP of the user "B" adds the user "A" to the best friend list (FIG. 4(b)) stored in the MMP of the user "B" in step 915, and then terminates the process. IF the response is rejection, the MMP of the user "B" directly terminates the process. In a case where the best friend list has already had five best friends before the addition of a user to the best friend list stored in the MMP, the MMP prompts the user to choose a best friend to delete to create a vacancy in the best friend list before addition of a best friend.

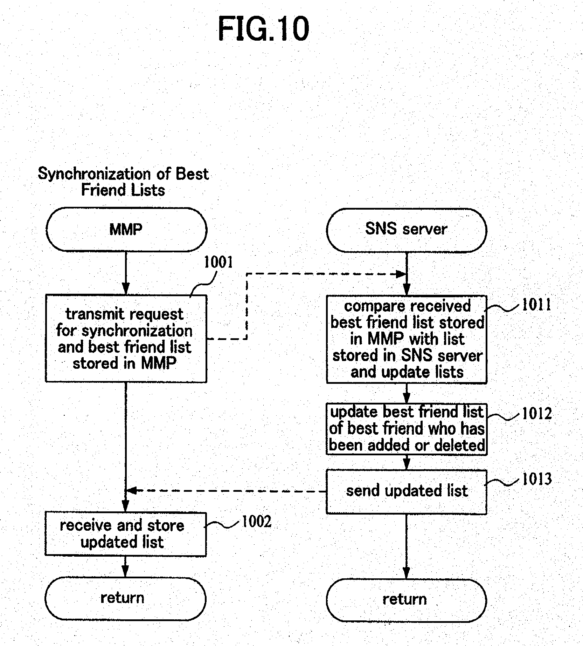

FIG. 10 shows a process for synchronizing the best friend lists. The registration of a best friend on the PC shown in FIG. 6 and the registration of a best friend on the MMP shown in FIG. 9 are done completely separately from each other. As a result, there are cases where the contents of the best friend list of a user stored in the SNS server 102 and the contents of the best friend list stored in the MMP of the user are not identical with each other. When the MMP of the user becomes capable of communicating with the SNS server (e.g., when the user makes his MMP connect with his PC or when the MMP is connected to the hot spot of the wireless LAN 109), therefore, the synchronization process shown in FIG. 10 is carried out to synchronize the best friend lists. The synchronization process may be carried out when the user makes instructions to do so on the MMP. In addition, the synchronization process may be automatically carried out when the MMP is connected to the SNS server 102.

In step 1001, the MMP transmits a request for synchronization along with the best friend list stored in the MMP to the SNS server 102. In step 1011, the SNS server 102 compares the received best friend list with the best friend list of the user stored in the SNS server 102, and updates the best friend lists. In step 1011, more specifically, the best friend user IDs included in the best friend list stored in the MMP are merged with the best friend user IDs included in the best friend list stored in the SNS server 102. In a case where the number of the merged best friend user IDs exceeds five, five best friend user IDs having the five newest date and time of registration are regarded as those to be included in the updated best friend list, while the other best friend IDs are deleted. In a case where the best friend lists are updated in step 1011, an update to the best friend list of the best friend who has been added or deleted is also necessary. Therefore, a process for updating the best friend list of the best friend who has been added or deleted is done in step 1012. In step 1013, the SNS server 102 sends the updated best friend list to the MMP. The MMP receives and stores the updated best friend list in the MMP in step 1002. The MMP then terminates the process.

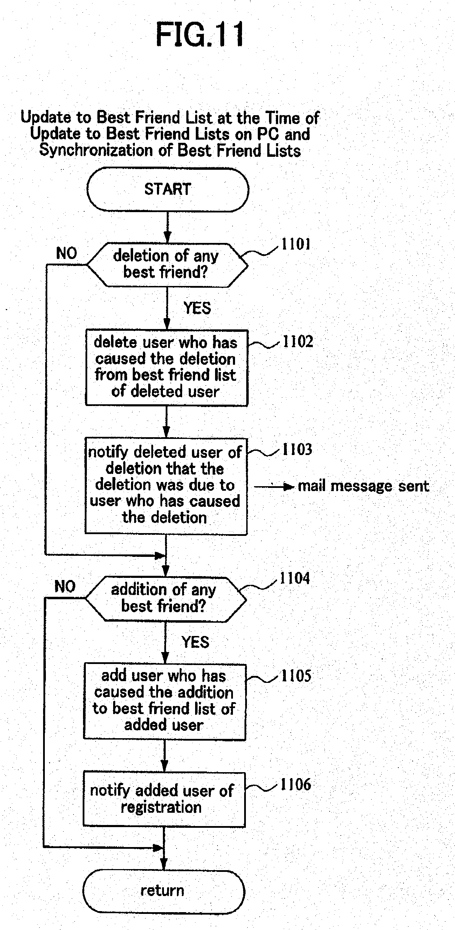

FIG. 11 shows a process for updating a best friend list required at the time of update of best friend lists on the PCs and synchronization of best friend lists. This process is performed by the SNS server 102 in cases where an update to the best friend lists in step 605 of FIG. 6 involves an update to the best friend list of a best friend affected by the update of step 605 of FIG. 6. In a case where the user "B" is deleted from the best friend list of the user "A", for instance, the user "A" has to be deleted from the best friend list of the user "B". Such processing is carried out by the process of FIG. 11. In cases where the best friend list is updated by step 1011 of the synchronization process of FIG. 10 as well, it is necessary to update the best friend list of a user affected by the synchronization. In such cases, the process shown in FIG. 11 is carried out in step 1012.

In step 1101, it is determined whether any best friend has been deleted from the updated best friend lists. More specifically, it is determined whether any best friend has been deleted from the updated best friend lists in step 605 or step 1011. If there is a deletion, the SNS server 102 deletes, in step 1102, the user who has caused the deletion (i.e., the user having the user data of the best friend list in which the deletion is made in step 605 or step 1011) from the best friend list of a user who has been deleted. In step 1103, the SNS server 102 sends a mail message to the deleted user of the deletion to notify that the deletion was due to the user who has caused the deletion. If it is determined in step 1101 that any best friend has not been deleted, the SNS server 102 proceeds to step 1104.

In step 1104, it is determined whether any best friend has been added to the updated best friend lists. More specifically, it is determined whether any best friend has been added to the updated best friend lists in step 605 or step 1011. If there is an addition, the SNS server 102 adds, in step 1105, the user who has caused the addition (i.e, the user having the user data of the best friend list in which the addition is made in step 605 or step 1011) to the best friend list of a user who has been added. In step 1106, the SNS server 102 sends a mail message to the added user to notify that the added user has been registered as a best friend of the user who has caused the addition. If it is determined in step 1104 that any best friend has not been added, the SNS server 102 directly terminates the process.

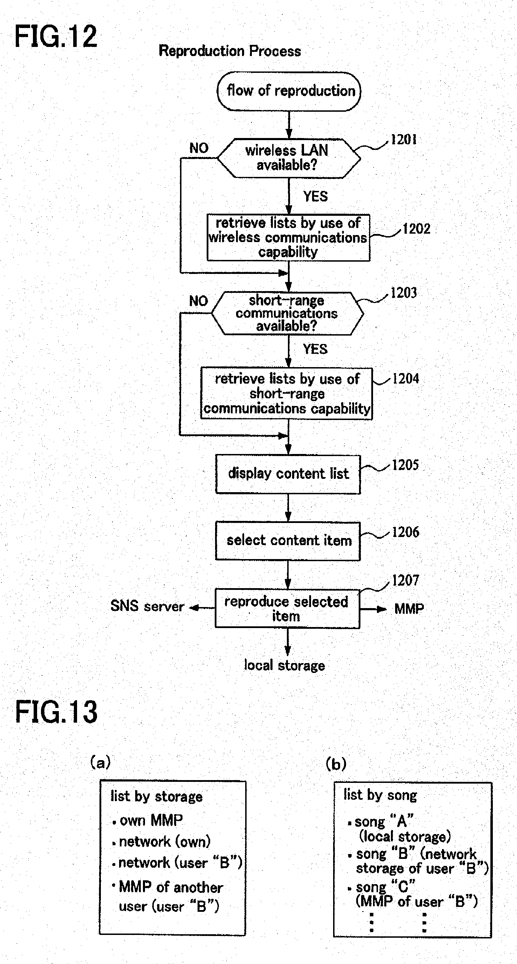

FIG. 12 shows a process for reproducing content on the MMP. If the user instructs the MMP to reproduce content, the MMP determines in step 1201 whether communications via the wireless LAN are available. If available, the MMP retrieves, in step 1202, lists of music content (content stored in the network storage of the user and those stored in the network storage of the user's best friends) from the SNS server 102 by use of the available middle-range wireless communications capability. In step 1203, the MMP determines whether communications via the short-range wireless communications are available. If available, the MMP retrieves, in step 1204, a list of music content from the MMPs of his best friends who are in proximity to the user (content stored in the local storage of the respective MMPs of the user's best friends) by use of the available short-range wireless communications capability.

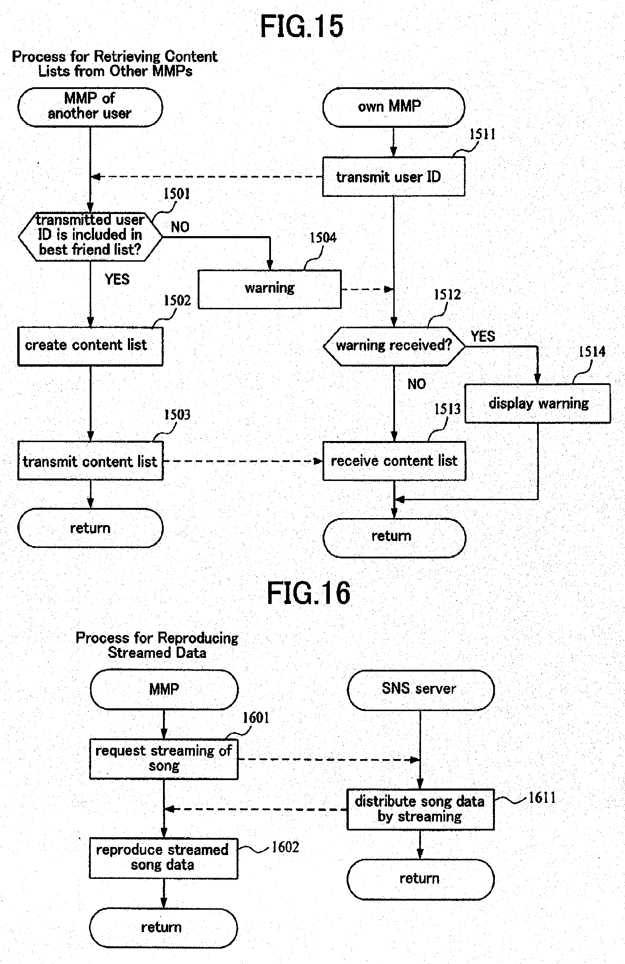

In step 1205, the MMP displays the content list. In step 1205, more specifically, the list of music content items stored in the local storage of the MMP and the lists of music content items retrieved in steps 1202, 1204 are combined to display. In step 1206, the user chooses an item that he desires to reproduce from the displayed list. In step 1207, the MMP starts reproducing the chosen content item. In step 1207, more specifically, in a case where the user's selected item is the one stored in the local storage of the MMP, the content item is directly read out and reproduced. In a case where the selected item is the one stored in the SNS server 102 or the local storage of the MMP of another user, the content item is reproduced by a streaming process which will be described later with reference to FIG. 16.

FIG. 13 shows examples of the list of music content displayed in step 1205. In a case where the content items are classified according to storage, as shown in FIG. 13(a), the MMP displays, as a menu, information provided for identifying storage from which the respective lists are retrieved in steps 1202 and 1204, the storage including the local storage of the MMP. When the user selects one of the storage, the MMP displays the list of music content items stored in the selected storage. FIG. 13(b) is an example display of a music content list classified according to songs. In this list, each song has a description about storage in which the song is stored.

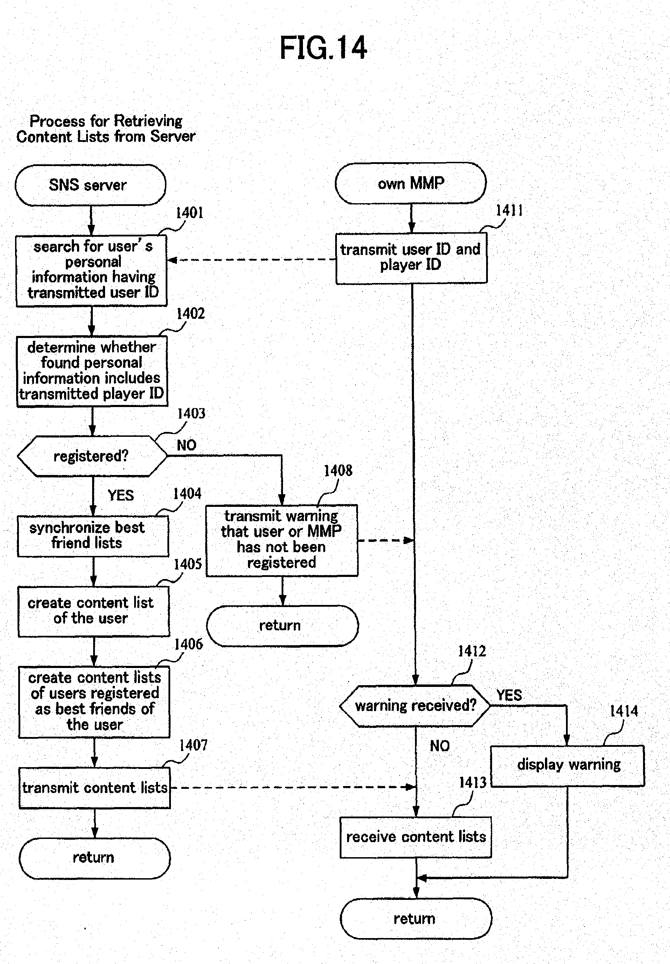

FIG. 14 shows a process carried out in step 1202 of FIG. 12, the process for retrieving music content lists from the SNS server 102 by use of the middle-range communications capability. In step 1411, the MMP transmits the user ID and the player ID to the SNS server 102. In step 1401, the SNS server 102 receives the IDs and searches for user's personal information which has the transmitted user ID. In step 1402, the SNS server 102 determines whether the found personal information having the user ID has the transmitted player ID. If not, the SNS server 102 proceeds from step 1403 to step 1408 to transmit a message to the MMP, warning that the user or the MMP has not been registered. The MMP receives the warning and proceeds from step 1412 to 1414 to display the warning.

If it is determined in step 1403 that the user ID and the player ID are included in the found personal information, the process (FIG. 10) for synchronizing best friend lists is carried out in step 1404 to synchronize the contents of the best friend list stored in the MMP and the contents of the best friend list of the user stored in the SNS server 102. In step 1405, the SNS server 102 creates a list of music content items stored in the user data of the user. In step 1406, the SNS server 102 creates lists of music content items stored in the user data of the users who are included in the best friend list of the user. In step 1407, the SNS server 102 transmits the created music content lists to the MMP. In step 1413, the MMP receives the lists.

FIG. 15 shows a process carried out in step 1204 of FIG. 12, the process for retrieving music content lists from the MMPs of his best friends by use of the short-range communications capability. In step 1511, the MMP transmits the user ID to an MMP of another user. In step 1501, the another MMP determines whether the received user ID is included in the best friend list stored in the another MMP. If not, the another MMP sends a warning to the MMP in step 1504. The MMP receives the warning and proceeds from 1512 to 1514 to display the warning. If it is determined in step 1501 that the received user ID is included, the another MMP creates a list of music content items stored in the another MMP in step 1502. In step 1503, the another MMP transmits the created list to the MMP. In step 1513, the MMP receives the list.

FIG. 16 shows a process carried out in step 1207 of FIG. 12. More specifically, FIG. 16 is a process for reproducing song data streamed from the SNS server 102. In step 1601, the MMP requests the SNS server 102 to stream the selected song. Instep 1611, the SNS server 102 which has received the request distributes the song data to the MMP by streaming. In step 1602, the MMP receives and reproduces the streamed song data. In cases where the MMP receives and reproduces song data streamed from an MMP of a user's best friend as well, the process is carried out similarly.

The above-described embodiment is designed such that the number of best friends is five or less, however, the number can be freely determined as long as the number can be considered to be within the range of private use. In this embodiment, furthermore, in a case where the user desires to add a best friend to his best friend list although his best friend list has been already filled to capacity, the user is prompted to designate one of his best friends to delete from his best friend list. Instead of user's designation, however, this embodiment may be modified such that one of the best friends to be deleted is automatically determined under a certain condition. For instance, a best friend with whom the user has exchanged the least number of mail messages may be to be deleted. Even in a case where the best friend is deleted from his best friend list, it is preferable that the deleted best friend remains a friend of the user.

In the above-described embodiment, at the time of streaming of a song between MMPs, an MMP of a user who desires to listen to a song issues a request for streaming to an MMP of another user who provides the song. However, streaming of songs may not necessarily be done in such a manner. For example, once MMPs are interconnected and then confirmed that the users of the MMPs have been registered each other as best friends, the one MMP may select and stream a song to the another MMP so that the another MMP can reproduce the streamed song on the another MMP.

In the above-described embodiment, music content items are shared between the users, however, the present invention is applicable not only to music content but also to various kinds of multimedia data.

The above description has been made as if users were allowed to reproduce an entire content file uploaded by another user in cases where a content file presents no copyright problem, the content file is allowed to be shared among a plurality of users, of course. In a case where a content file is commercial data, however, copyright problem will arise if such a commercial content file is shared among a plurality of users. Therefore, this embodiment is designed such that the SNS server 102 which is a content provider server is provided with a capability of blocking infringement of copyright and protecting copyright holders even when a user uploads a commercial content file to the SNS server 102.

FIG. 17 shows a content identifying server 1701, an affiliate provider server 1702, and a related product selling server 1703 which are connected to the SNS server 102. In FIG. 17, these servers 1701 to 1703 are configured by separate pieces of hardware to access each other via a network. However, these servers 1701 to 1703 may be realized by the same piece of hardware as the SNS server 102. FIG. 18 shows a process procedure used in a system configured as shown in FIG. 17.

Assume that the PC 103 of the user "A" shown in FIG. 17 uploads a content item to the SNS server 102. Step 1801 of FIG. 18 is the uploading process. The SNS server 102 receives the content item in step 1811, and then extracts a fingerprint of the content item in step 1812. The fingerprint is data which can be regarded as a fingerprint of a content item. More specifically, the fingerprint is obtained by extracting characteristics of the content item and rendering the extracted characteristics as data having values unique to the content item. In step 1813, the SNS server 102 transmits the extracted fingerprint to the content identifying server 1701 for inquiry.

The content indentifying server 1701 has a fingerprint database which stores fingerprints of commercial content items. In step 1831, the content identifying server 1701 compares the transmitted fingerprint with the fingerprint database. In step 1832, if the comparison result shows good agreement which satisfies a certain value or more, content metadata (various kinds of data for identifying the content item such as song title, artist's name, lyricist's name, composer's name, etc. including data indicative of whether the content item is commercial or not) previously stored in the content identifying server 1701 in association with the fingerprint is transmitted to the SNS server 102. If the comparison result shows agreement which is less than the certain value, the content identifying server 1701 notifies the SNS server 102 of the failed identification.

The SNS server 102 receives the response from the content identifying server 1701, and stores the comparison result in association with the content item in step 1814. More specifically, if the metadata of the content item has been obtained, the SNS server 102 stores the metadata. If no metadata has been obtained (if the content item has failed the identification), the SNS server 102 stores the notification of the failed identification in association with the content item. Thus, content items uploaded by users are identified. The art for extracting a fingerprint from a content item and identifying the content item has been disclosed in US Patent 2003/0086341, for example. What is disclosed in US Patent 2003/0086341 is incorporated in this specification.

In step 1815, the SNS server 102 determines whether the content item is commercial content. If so (if the content item is copyrighted), the SNS server 102 creates, in step 1816, data representative of part of the content item, the data being obtained by cutting the content item to extract the part of the content item from the beginning of the item, the part being equivalent to a certain length of time (e.g., about 30 seconds) for a test-listen. In step 1817, the SNS server 102 queries the affiliate provider server 1702 to search for affiliate data on products related to the content item by the metadata of the content item. In step 1841, the affiliate provider server 1702 provides the affiliate data associated with the content item for the SNS server 102. The affiliate data is information for linking to the selling server 1703 which sells products (music CD and DVD video which include an original of the content item, and audio data, video data, MIDI data, etc. for authorized pay downloading) related to the content item.

In step 1818, the SNS server 102 adds the affiliate data provided by the affiliate provider server 1702 to a page which provides the content item (page which provides the user with the data obtained by extracting part of the content item in step 1816, the part being equivalent to the certain length of time). In some cases, no affiliate data is found for a content item. In these cases, affiliate data will not be added to the page which provides the content item for test-listen for the user in step 1818, but the SNS server 102 provides only the content for test-listen. If it is determined in step 1815 that the content item is not commercial content, the SNS server 102 prepares a page which provides the entire content item for the user, and then proceeds to step 1819.

In step 1819, the SNS server 102 stores the content in a file for streaming. In step 1820, the SNS server 102 releases the page which provides the content.

In a case where a content item uploaded by the user "A" is commercial content, for example, a page which provides part of the content item for test-listen obtained by extracting the part of the content item equivalent to a certain length of time is automatically released. Therefore, the user "B" shown in FIG. 17 is allowed to reproduce the streamed content for test-listen. Even in cases where content items are commercial content, as a result, users are allowed to upload the commercial content items without infringing copyright. In cases where content items are not commercial (content items whose copyright has expired or original content items created by the user "A" on his own), those content items are allowed to be streamed to other users as entirely reproducible data without being cut. In these cases, those content items may be downloaded to other users.

As described above, furthermore, the page which provides the content obtained by extracting to have the part equivalent to the certain length of time for test-listen has the affiliate data indicative of information for linking to the selling server 1703 which sells products related to the content item. As a result, users who test-listen to the content item are able to access the related product selling server 1703 through the use of the affiliate data to purchase the related products. In cases where a product related to the content item is purchased on this page, the present invention may be designed such that an administrator of the selling server 1703 pays a reward (e.g., a certain percentage of a sales price) to a user who has uploaded the content item. Such a reward system can contribute to increased activeness and popularity of the SNS server. To copyright holders of content items as well, the reward system is advantageous because the reward system can contribute to the spreading of the content items and the facilitated sale of the content items.

The related product selling server 1703 and the affiliate provider server 1702 may be the same server. The content identifying server 1701 may be managed by an administrator who is different to that of the SNS server 102. The art for affiliate has been disclosed in Japanese Patent Laid-Open Publication No. 2006-048430, for example. What is disclosed in Japanese Patent Laid-Open Publication No. 2006-048430 is incorporated in this specification.

The present invention may be modified such that the SNS server handles affiliate, data provided not only by one selling server but also by a plurality of selling servers, In a case where a plurality of selling servers are found for a content item, the SNS server may add affiliate data provided by one of the selling servers. Alternatively, the SNS server may add affiliate data provided by all the found selling servers.

Even in a case where the SNS server creates data obtained by extracting part of the content item equivalent to the certain length of time in step 1816, the SNS server 102 stores the original data in the network storage of the user for the use of the original data by the user who has uploaded the content item. In the above description, the entire commercial content item is allowed to be used only by the user who has uploaded the content item, while other users are allowed to reproduce only the extracted content for test-listen. However, the users whom the user has registered as best friends may be allowed to reproduce not the content data for test-listen but the entire content item.

## Claims

1. A social networking system for providing communications services available to users who have established a relationship of best friends between the users, the social networking system including a server and a plurality of user apparatuses which are allowed to be interconnected via a network;
the server comprising:
storing means for storing, in a storage area provided for each of the users who use the respective user apparatuses, multimedia data of the each user and a best friend list of the each user, the best friend list being provided for identifying users between whom the each user has established the relationship of best friends within a range of a certain number of users which can be considered as private use; and
access permitting means for permitting, when the server receives an access request from one of the user apparatuses, access to multimedia data stored in the storage area of a user who uses the one user apparatus and multimedia data stored in the storage area of users with whom the user has established the relationship of best friends, the users being identified on the basis of the best friend list of the user; and
each of the user apparatuses comprising:
access requesting means for issuing a request for accessing multimedia data stored in the storage means of the server.

2. A social networking system according to claim 1, wherein
the multimedia data stored in the storing means is data uploaded from the user apparatuses.

3. A social networking system according to claim 1, wherein
the user apparatuses are mobile media players;
each of the mobile media players further comprising:
reproduction requesting means for issuing a request for reproducing the multimedia data to which access has been permitted; and
reproducing means for reproducing the multimedia data streamed from the server in response to the reproduction request; and
the server further comprising:
streaming means for streaming the multimedia data of which reproduction has been requested to the mobile media player.

4. A social networking system according to claim 3, wherein
each of the mobile media players further comprises:
communicating means for communicating with another mobile media player;
best friend list storing means for storing a best friend list which identifies users with whom a user of the each mobile media player has established the relationship of best friends;
multimedia data storing means for storing multimedia data of the user of the each mobile media player; and
streaming means for determining, when the another mobile player communicates with the each mobile media player, whether the user of the each mobile media player has established the relationship of best friends with a user of the another mobile media player, and if so, streaming the multimedia data stored in the multimedia data storing means to the another mobile media player.

5. A social networking system according to claim 1, wherein
each of the user apparatuses further comprises best friend relationship establishing means for establishing the relationship of best friends with another user.

6. A social networking system according to claim 5, wherein
each of the user apparatuses is a personal computer;
the best friend relationship establishing means of each of the user apparatuses designates another user with whom the user of the each user apparatus desires to establish the relationship of best friends, and inquires of the server; and
the server further comprises updating means for receiving the inquiry, notifying a user apparatus of the designated another user of the inquiry, and updating the best friend list stored in the server in response to a response from the user apparatus of the another user.

7. A social networking system according to claim 6, wherein
each of the personal computers stores a best friend list, and comprises updating means for updating the best friend list if the relationship of best friends is changed.

8. A social networking system according to claim 6, wherein
the user apparatuses further include mobile media players each of which stores a best friend list representative of best friends; and
each of the mobile media players has synchronizing means for communicating with the server to synchronize contents of the best friend list stored in the each mobile media player with contents of the best friend list stored in the server.

9. A social networking system according to claim 1, wherein
the user apparatuses are mobile media players each storing a best friend list; and
each of the mobile media players has updating means for inquiring of another mobile media player of another user about a desire to establish the relationship of best friends with the another user, and then updating the best friend list in accordance with a response from the another mobile media player.

10. A social networking system according to claim 9, wherein
the server has synchronizing means for communicating with each of the mobile media player to synchronize the best friend list stored in the server with the best friend list stored in the each mobile media player.

11. A social networking system according to claim 9, wherein
the user apparatuses further include personal computers each storing a best friend list representative of best friends; and
each of the personal computers has synchronizing means for communicating with the server to synchronize the best friend list stored in the each personal computer with the best friend list stored in the server.

12. A social networking system according to claim 1, wherein
each of the user apparatuses further comprises uploading means for uploading content data to the server as the multimedia data, and
the server further comprises:
content identifying means for automatically identifying, when content data is uploaded from one of the user apparatuses, the content data; and
provision changing means for changing, in accordance with an identification result of the content data, a manner in which the content data is provided for another user apparatus.

13. A server according to claim 12, wherein
the provision changing means changes, in accordance with whether the identified content data is commercial content or not, a length of time of the content data to be provided.

14. A server according to claim 12, wherein
in a case where the identified content data is commercial content, the provision changing means automatically adds, to the content data, affiliate information which is information for linking to a site which sells a product related to the commercial content data, and provides the content data with the link information added.

15. A computer program applied to a server of a social networking system which includes the server and a plurality of user apparatuses which are allowed to be interconnected via a network and provides communications services available to users who have established a relationship of best friends between the users, the computer program comprising the steps of:
a storing step for storing, in a storage area provided for each of the users who use the respective user apparatuses, multimedia data of the each user and a best friend list of the each user, the best friend list being provided for identifying users between whom the each user has established the relationship of best friends within a range of a certain number of users which can be considered as private use; and
an access permitting step for permitting, when the server receives an access request from one of the user apparatuses, access to multimedia data stored in the storage area of a user who uses the one user apparatus and multimedia data stored in the storage area of users with whom the user has established the relationship of best friends, the users being identified on the basis of the best friend list of the user.

16. A computer program according to claim 15 further comprising the steps of:
a content identifying step for automatically identifying, when multimedia data is uploaded from one of the user apparatus, the multimedia data; and
a provision changing step for changing, in accordance with an identification result of the multimedia data, a manner in which the multimedia data is provided for another user apparatus.
